# EUROPEAN PATENT APPLICATION

(11) **EP 4 505 872 A1**
(43) Date of publication of application: **12.02.2025**
(21) Application number: 23191097.7
(22) Date of filing: 11.08.2023
(51) Int. Cl.: A01L 1/00, A01L 1/02, A01L 11/00

(54) **MANUFACTURING METHOD FOR PRODUCING A CUSTOMIZED LIGHTWEIGHT HORSESHOE AND CUSTOMIZED LIGHTWEIGHT HORSESHOE**

(71) Applicant: Apworks GmbH, 82024 Taufkirchen (DE)
(72) Inventor: PARKES, Philip, 82024 Taufkirchen (DE); SCHEBEK, Thomas, 82024 Taufkirchen (DE)
(74) Representative: Isarpatent

(57) **Abstract**

The present invention relates to a manufacturing method, in particular an additive manufacturing method, for producing a customized lightweight horseshoe (1) comprising the steps of: ecording at least one set of 2D input data (S1) comprising data relating to the exterior and/or interior contour (8; 9) of the horseshoe (1) and to at least one reference feature; determining 2D structure data (S2) describing a required topology of the horseshoe (1) by analyzing the recorded at least one set of 2D input data; determining 3D structure data (S3) of the horseshoe (1) by analyzing the determined 2D structure data and additional supplementary structure data (S3b); generating manufacturing toolpath data (S4) of the horseshoe (1) from the determined 3D structure data; supplying the generated manufacturing toolpath data (S5) to a respective production device; and producing the customized horseshoe (S6) by means of the respective production device. Further, the present invention relates to a customized lightweight horseshoe (1) being manufactured by such an additive manufacturing method, in particular such an additive manufacturing method.

## Description

The present invention pertains to a manufacturing method, in particular an additive manufacturing method, for producing a customized lightweight horseshoe and to a customized lightweight horseshoe.

Horseshoes for riding horses can have a very significant weight, depending on the size of the horse and the type of load to which the horse is exposed. In the movement of the horse leg in itself, but especially in racing, an excess of weight is disadvantageous. For example, the hoof-roll apparatus is unnecessarily stressed by the use of heavy horseshoes due to an increased acceleration of the mass, and the tendons and ligaments must perform more the heavier the hoof and therefore the horseshoe is. Weight-optimized, and ideally also perfectly matching, tailor-made horseshoes have therefore been the focus of recent hoof technology.

Weight-optimized horseshoes are already known from the prior art. For example, document FR 2973 644 A1 describes a horseshoe that consists of three layers. The lower layer is resistant to abrasion and has good friction properties, which should improve adhesion to the substrate. The middle layer is made of a composite material and is intended to provide rigidity. The upper layer contacts the hoof and is deformable.

Furthermore, the design of lighter horseshoes is also addressed in document DE 40 27 057 A1. This document describes a method for producing a horseshoe, in which the individual dimensions of the hoof are being detected directly on the hoof, wherein the horseshoe is made by a milling machine out of a solid material.

Further, document EP 3 337 316 B1 describes a generatively produced customized horseshoe made of a metal material and having a plurality of through-holes for horseshoe nails, wherein the horseshoe comprises at least one lightweight structure in its interior. The horseshoe is made by carrying out a 3D scan of the hoof by means of a foam and by storing and converting the recorded 3D scan data.

However, for such a 3D scan, it is necessary to carry out the 3D scan using the actual hoof and to record said hoof print in a reproduction material, for example a foot impression foam. Such a 3D scan is therefore sometimes difficult to be carried out by the farrier or the owner of the respective horse.

Against this background, it is an object of the present invention to provide a method for producing a customized lightweight horseshoe which can be carried out in a more practical way.

This object is achieved by a method having the features of claim 1 and by a horseshoe having the features of claim 11.

According to the invention, a manufacturing method, in particular an additive manufacturing method, for producing a customized lightweight horseshoe is provided comprising the steps of: recording at least one set of 2D input data comprising data relating to the exterior and/or interior contour of the horseshoe and to at least one reference feature; determining 2D structure data describing a required topology of the horseshoe by analyzing the recorded at least one set of 2D input data; determining 3D structure data of the horseshoe by analyzing the determined 2D structure data and additional supplementary structure data; generating manufacturing toolpath data of the horseshoe from the determined 3D structure data; supplying the generated manufacturing toolpath data to a respective production device; and producing the customized horseshoe by means of the respective production device.

Thus, one idea of the present invention is to provide a simplified method of recording data being necessary for producing a customized lightweight horseshoe.

The idea is to record at least one set of 2D input data instead of 3D input data, wherein these recorded at least one set of 2D input data comprise 2D horseshoe contour data as well as at least one reference data such that the recorded at least one set of 2D input data can be analyzed and transferred to 3D structure data of the horseshoe. Hence, in order to be able to convert 2D data into 3D data, together with the data relating to the exterior and/or interior contour of the horseshoe, additional 2D input data in the form of at least one reference data is also recorded by for example the farrier. Thus, it is merely necessary for the farrier or the owner of the horse to record at least one set of 2D input data which can for example easily be conducted by a scanner or a mobile phone camera or the same. Hence, no complicated foam or the same is necessary to determine the 3D structure of the horseshoe.

Further, according to the present invention, a customized lightweight horseshoe is manufactured by a method as described above, in particular an additive manufacturing method.

Advantageous embodiments and improvements of the present invention are found in the subordinate claims.

According to an embodiment of the present invention, the recorded at least one set of 2D input data relating to the top or bottom surface of the horseshoe and the at least one reference feature are gained from an existing horseshoe, a template of the horseshoe, a template of the hoof or the same. Hence, advantageously, the farrier merely has to scan or photograph an existing horseshoe, a template of such a horseshoe or a template of the hoof or the like, or to make a video thereof. With such a simplified process, it is more time- and cost-efficient to provide the necessary data for manufacturing a customized horseshoe. No complicated foam prints or other 3D data have to be recorded and transmitted to the respective manufacturer. Thus, the whole manufacturing process is enhanced and the timeline and efforts for the complete production process can be reduced.

According to an embodiment of the present invention, the at least one reference feature is formed as a physical reference feature such as a grid, a dot-pattern, shapes or the like being printed on a card, a paper, a plastic sheet, for example in transparent form, or the like, a ruler, callipers, a coin or any other object of a well-known size. Hence, for example, an existing horseshoe or a template of the horseshoe or of the hoof can be scanned or photographed together with such a physical reference feature, for example an international coin of a well-known size or a grid or dot-pattern having specific and well-known dimensions. Thus, together with the 2D input data relating to the top or bottom surface of the horseshoe, the exact 2D dimension of a respective horseshoe are recorded in a simplified manner.

According to an embodiment of the present invention, the at least one set of 2D input data are recorded by a photographing process, a scanning process, a video process or any other optical process. Hence, a standardized flatbed office-style scanner, a mobile phone using a photo camera or a photo camera or camera itself can be used advantageously. In particular, a mobile phone provides a very simplified manner for the farrier or the owner of the horse to record the respective at least one set of 2D input data. Alternatively, any other optical method can be used as well, for example a laser process or the like.

According to an embodiment of the present invention, the 2D structure data are extracted from the at least one set of 2D input data by using an image recognition process. Hence, 2D structure data are provided in a cost-effective manner.

According to an embodiment of the present invention, the 2D structure data are determined from the at least one set of 2D input data by taking into consideration the outer outline of the horseshoe, the shape of the horseshoe, the size or dimension of the horseshoe, the position of at least one clip, the position, orientation and/or inclination of at least one nail hole, the configuration of a nail hole groove, the presence of a medicinal feature and/or the detection of the hoof position or the like. Advantageously, a 2D structure of the customized horseshoe is thus determined comprising all relevant dimensions, features or shapes being necessary to manufacture an optimized and customized horseshoe. These 2D structure data can be determined by analyzing merely the at least one set of 2D input data or by adding additional information data in respect to specific shapes or features. Hence, it is advantageously possible to manufacture a customized horseshoe being adapted to the at least one set of 2D input data provided by the farrier or the owner of the horse by analyzing these data together with further information data regarding specific additional features, shapes or the like required or wished by the farrier or the owner of the horse.

According to an embodiment of the present invention, the supplementary structure data comprise data regarding the structure for reducing weight, for improving durability, for increasing stiffness, for improving manufacturability, for adding customized text or logos on the horseshoe, for adding additional features to the horseshoe or the like. Advantageously, an optimized customized horseshoe is provided comprising individually adapted features, for example for fulfilling specific requirements in respect to durability, stiffness, manufacturability, optical requirements, adding medicinal features or the like.

According to an embodiment of the present invention, the 3D structure data are determined by using a 3D geometry creation program. Hence, the 3D geometry creation program provides 3D structure data taking different features, mainly geometric features, into consideration such that the 3D geometry creation program generates a 3D structure of the customized horseshoe comprising all relevant and required features. Hence, in a very simplified and cost-effective manner, a 3D structure of the customized horseshoe is provided.

According to an embodiment of the present invention, any or some of the determined data are stored in a storage device such as an archive or the same in order to re-train and improve the additive manufacturing method. This is on the one hand possible for the determined 2D data as well as for the determined 3D data in order to improve future manufacturing processes in a continued manner.

According to an embodiment of the present invention, the material Scalmalloy, titanium, aluminium, steel or any other material being suitable for a lightweight structure is used for the additive manufacturing method. Advantageously, in combination with the high strength, lightweight material Scalmalloy, the properties of the horseshoe can be kept at the same level by significantly reducing the weight.

According to an embodiment of the present invention, the customized lightweight horseshoe comprises predetermined sections having cross sections differing from each other for providing for example a nail hole groove for receiving at least one nail, for providing a thickened portion for enhancing durability, in particular in a high wear section, for providing a thinner section for reducing weight, in particular in a low wear section, for providing a one- or two-chamber structure or a honeycomb structure and the like. Hence, the properties of the horseshoe can be kept at the same quality level by significantly reducing the weight since sections are formed with different properties due to different cross sections in order to fulfill the respective requirements of these sections of the horseshoe. Since it is always a trade-off between the weight and material properties of the horseshoe, providing a horseshoe with different cross sections provides the advantage of reducing the weight by no loss of important properties of the horseshoe.

According to an embodiment of the present invention, the customized lightweight horseshoe comprises customized features like a customized text or logo on its surface, at least one customized positioned clip, at least one customized formed nail hole, at least one nail hole groove, at least one customized medicinal feature or the like. Advantageously, such a customized horseshoe is manufactured comprising all required properties of the owner of the horse in order to provide a perfectly fit and fully equipped customized horseshoe.

According to an embodiment of the present invention, the interior wall of said at least one customized nail hole is inclined with a predetermined angle in respect to a straight through direction, in particular with an angle between 0 degree and 60 degrees, and/or wherein the interior wall of said at least one customized nail hole is formed with a predetermined nail gap such that the allocated nail can be inserted with different inclination angles for encompassing a nail in a predetermined inclined orientation. Hence, the introduction of the nails into the hoof can be conducted with an optimized nail direction and inclination . It is obvious for a person skilled in the art that any other angle could be possible and that also a straight through orientation of the nail hole could also be provided.

According to an embodiment of the present invention, the horseshoe is made of Scalmalloy, titanium, aluminium, steel or the like. With the lightweight material Scalmalloy, advantageously, the high strength properties of the shoes can be kept at the same level by significantly reducing the weight.

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. In the figures, like reference numerals denote like or functionally like components, unless indicated otherwise.

In the drawings, the following is depicted:
- Fig. 1: a schematic flow diagram of a method according to an embodiment of the present invention;
- Fig. 2: a top view of a customized lightweight horseshoe according to an embodiment of the present invention;
- Fig. 3: a bottom view of the horseshoe of Fig. 2;
- Fig. 4: a cross section view along line A-A of Fig. 2;
- Fig. 5: a cross section view along line B-B in Fig. 2;
- Fig. 6: a cross section view along line C-C in Fig. 2;
- Fig. 7: a cross section along line D-D in Fig. 2; and
- Fig. 8: a cross section view along the sheet level of a customized horseshoe according to an embodiment of the present invention.

Although specific embodiments are illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

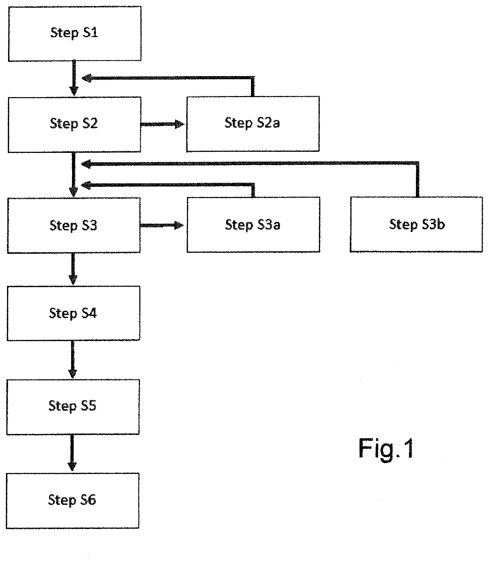

Fig. 1 depicts a schematic flow diagram of a manufacturing method according to an embodiment of the present invention.

The method according to Fig. 1 comprises a first step S1 of recording at least one set of 2D input data wherein this at least one set of 2D input data comprise firstly data relating to the exterior and/or interior contour 8, 9 of the required horseshoe 1. That means that all data with which at least a part of the contour 8, 9 of the horseshoe 1 can be determined are possible, in particular data regarding the complete exterior contour 8 and interior contour 9 of the horseshoe 1. However, it might also be sufficient to merely record data regarding the exterior contour 8 or merely regarding the interior contour 9 of the horseshoe 1. This could be in view of the top surface 5 of the horseshoe 1 or in view of the bottom surface 6 of the horseshoe 1, wherein the contour 8, 9 of the top surface of the horseshoe 1 is preferred. The basis could be an existing horseshoe, for example shaped by a farrier, wherein the existing horseshoe might be on or off the respective hoof. Further, a template of an already tailored horseshoe might also be possible, for example a cardboard could be used. Alternatively, a template of the shape of the respective hoof can form the basis for the required data or the respective hoof itself. It is obvious for a person skilled in the art that it is merely necessary to be able to gain 2D data in relation to the exterior contour 8 and/or the interior contour 9 of the required horseshoe 1.

Additionally, said at least one set of 2D input data comprise at least one reference feature wherein this reference feature can be formed by a grid, a dot pattern or any shapes being printed on a card, a paper or a plastic sheet or the like. This card, paper or plastic sheet is for example opaque or transparent and can be put over the hoof, over or under the existing horseshoe or template. Alternatively, a common ruler, calliper or a usual coin could be used as the physical reference feature.

It is obvious for a person skilled in the art that the physical reference feature can be any object of a well-known size in order to determine the correct dimensions of the horseshoe 1. It is merely necessary that the scale for estimating the dimensions of the required horseshoe 1 is recorded together with the data relating to the exterior contour 8 and/or interior contour 9 of the horseshoe 1 in order to transfer the recorded at least one set of 2D input data to the required real dimension data.

The recording of the at leastone set of 2D input data is conducted preferably by a scanning process by means of, for example, a 2D flatbed, office-style scanner, by photographing by means of a camera, in particular the camera of a mobile phone, or by any other optical method, for example a laser process, a video process or the like.

Thus, a farrier has advantageously merely to record the required at least one set of 2D input data as described above in said first step S1 and transfer this at least one set of 2D input data to the manufacturing firm. All other steps, as described below, are conducted by the manufacturing firm without any further input being necessary. This reduces the time and cost efforts of the farrier extensively.

As depicted in Fig. 1, in a second step S2, the transferred at least one set of 2D input data are extracted in order to determine 2D structure data of the horseshoe 1, in particular by using an image recognition process, i.e. by using a specific analysis algorithm.

During step S2, the at least one set of 2D input data relating to at least a part of the exterior contour 8 and/or interior contour 9 of the horseshoe 1, i.e. the 2D shape, as well as to the reference feature data are extracted and analyzed describing a required topology of the horseshoe 1, wherein preferably the position and orientation of respective nail holes 10, the presence of clips 11, the presence of respective medicinal features and/or the detection of which foot of the horse it is, front hoof, rear hoof, left hoof or right hoof, are additionally taken into consideration. Additional information data as an additional information could already be part of the at least one set of 2D input data or added to the at least one set of 2D input data afterwards. Hence, the required data are extracted from the recorded at least one set of 2D input data of step S1 and optionally modified by additional data being provided by the farrier.

Optionally, as a step S2a it is also possible that the additional information data are provided by a storage device, wherein additional information regarding a similar or identical horseshoe from the past or the presence are stored and used. Also, the presently extracted data might be added to a storage device or an archive as a means of feedback for continued improvement and re-training of the manufacturing method. This additional step is depicted as step S2a in Fig. 1.

In a subsequent step S3, the determined 2D structure data are converted to 3D structure data, preferably by means of a 3D geometry creation program. In a further optional step S3b as depicted in Fig.1, additional supplementary structure data, for example from a library or a storage device, for example in the form of geometric features, are added to the already gained 2D structure data in order to determine 3D structure data comprising all relevant and required features. Such supplementary structure data, in particular, comprise data regarding the structure of the horseshoe 1 for reducing weight, for improving durability, for increasing stiffness, for improving manufacturability, for adding customized text or logos on the horseshoe 1 and/or for adding additional features to the horseshoe 1 or the like. The customized text or logos could be a customized branding or a customized text, for example a serial number of the horseshoe 1, the horse, the trainer, the farrier, the stable, the owner, the jockey name, the race name and/or a date for which it will be used. Some of the additional geometric features are explained in more detail further below.

Analog to step S2a, a step S3a is optionally possible for storing the determined 3D structure data in a respective storage device for using these stored data in future processes in order to optimize, improve and re-train the manufacturing method. The above-mentioned storage devices in steps S2a, S3a and S3b could be one common storage device or could be formed as single independent storage devices.

In a subsequent step S4 as depicted in Fig. 1, manufacturing toolpath data of the horseshoe 1 are generated from the determined 3D structure data such that a complete 3D model is generated of the required horseshoe 1. The manufacturing toolpath date might be formed as layer data in case an additive manufacturing method is used.

In a subsequent step S5, the generated manufacturing toolpath data are supplied to a respective production device configured for the manufacturing of the required horseshoe 1. The manufacturing device is preferably formed as an additive manufacturing device. However, any other suitable manufacturing device is also possible like for example a waterjet cutting device for cutting a CFRP material, a CNC machining device for machining aluminium or the like. Preferably, this is supported by an automatic manufacturing preparation process comprising for example an optimization of the part orientation, the generation of, in particular sacrificial, support structures and/or nesting of parts for an economical or efficient production.

In a subsequent step S6 as depicted in Fig. 1, the required customized horseshoe 1 is produced by means of said production device, in particular by an additive manufacturing device. For this process, preferably the material Scalmalloy, titanium, aluminium, steel, a combination thereof or any other suitable material for a lightweight structure is used for the additive manufacturing method. In particular, the material Scalmalloy provides a high strength and lightweight material such that the properties of the horseshoe 1 can be kept - compared to other materials being used so far - at the same level by advantageously significantly reducing the weight.

Optionally, instead of the required horseshoe 1, it is also possible to manufacture a respective mold for the subsequent production of the required horseshoe 1 by a secondary process, for example by means of a "lost-wax" casting or the like.

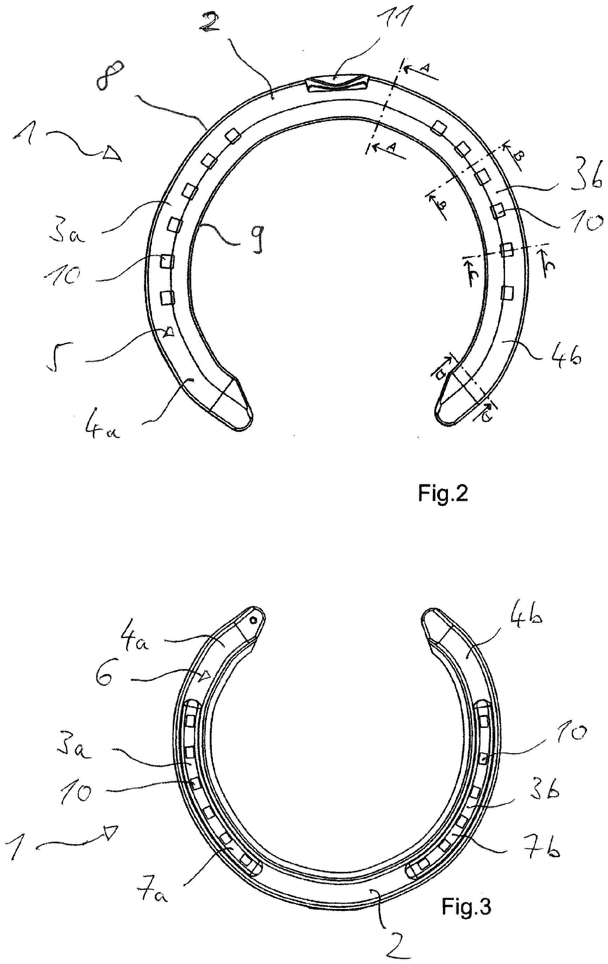

In the following, with regard to Figs. 2 to 8, preferred embodiments of a horseshoe 1 being manufactured by a manufacturing method as described above are described in more detail.

Fig. 2 depicts a top view of the top surface 5 of a customized manufactured horseshoe 1 facing the hoof and Fig. 3 illustrates a bottom view of the bottom surface 6 of said horseshoe 1 facing the ground according to an embodiment of the present invention. The contour 8, 9, i.e. the shape, is at least partly adapted to the actual form and needs of the corresponding hoof such that each horseshoe comprises individually configured geometries und features as explained above in respect to Fig. 1.

The horseshoe 1 according to said embodiment comprises a front section 2, a left middle section 3a and a right middle section 3b, a left rear section 4a and a right rear section 4b.

In order to simplify shoeing and to serve as a stop or to provide improved rolling behavior of the hoof, the customized horseshoe 1 can be manufactured with an adapted clip 11.Optionally, no clip 11 or more than one clip 11 may be present on the horseshoe 1 . As depicted in Fig. 2, the horseshoe 1 according to the present invention preferably comprises one clip 11 being formed in the front section 2 on the top surface 5 in an upright direction.

It is further possible to equip the horseshoe 1 on its top surface 5 facing the hoof with anti-slip structures for improved shoeing. Such structures can also be provided on the bottom surface 6 of the horseshoe 1 to support the grip.

The horseshoe 1 is intended to be nailed onto a horse's hoof and therefore has nail holes 10, respectively through-holes 10, for horseshoe nails. Additionally, as depicted in Fig. 3, on the bottom surface 6 along the line of the nail holes 10 and in particular in the middle sections 3a and 3b, there are provided nail hole grooves 7a and 7b for receiving the nail heads. However, it is also possible that the horseshoe 1 is glued to the hoof, wherein in such a case no nail holes and no nail grooves are necessary such that these can be omitted and such that the top surface 5 might be provided with adapted glue characteristics advantageously.

The lightweight structure of the horseshoe 1 can be formed in various ways, for example, the horseshoe 1 can comprise one or more chambers 14; 16a, 16b. These chambers 14; 16a, 16b may be subdivided or be limited by webs or ribs or walls to give greater stability to the cavity formed by the chambers. A one-chamber structure or a two-chamber structure are preferred embodiments. Alternatively, honeycomb-like structures or the like are also possible.

In particular, the single sections 2; 3a, 3b; 4a, 4b have cross sections differing from each other such that each section 2; 3a, 3b; 4a, 4b fulfills the respective requirements of the respective horseshoe area.

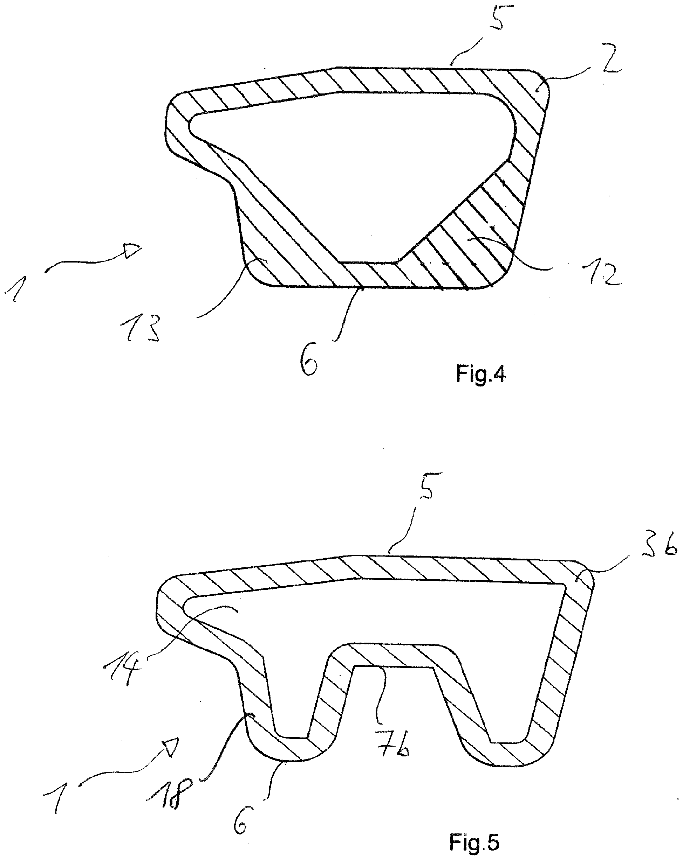

For example, it is possible to provide the horseshoe 1 in the first section 2 comprising a first cross section with a first thickened portion 12 and a second thickened portion 13 being positioned adjacent to the bottom surface 6, as depicted in Fig. 4, wherein Fig. 4 illustrates a cross section view along the line A-A of Fig. 2. Said first thickened portion 12 is positioned in particular at a section where the horse's toe rolls off such that in this area the durability is advantageously enhanced in this edge area directed to the front side of the horseshoe 1.

Further, a second thickened portion 13 might be provided on the opposite lower edge area of the front section 2, in particular to enhance the manufacturability during the manufacturing method. Since such an additional material for the printing process is primarily required in the front section 2 and since this front section 2 determines the highest wear area, these additional thickened portions 12, 13 are advantageously formed in this front section 2 extending for example from the middle front part of the horseshoe 1 to about the beginning of the nail hole grooves 7a and 7b or nail holes 10. Thus, advantageously, the wear resistance and the rigidity as well as the manufacturability are further improved in the front section 2.

To both sides of the front section 2, there are following-up the middle sections 3a and 3b comprising second cross sections, wherein the single sections 2 and 3a, 3b preferably comprising differing cross sections flowing over into each other.

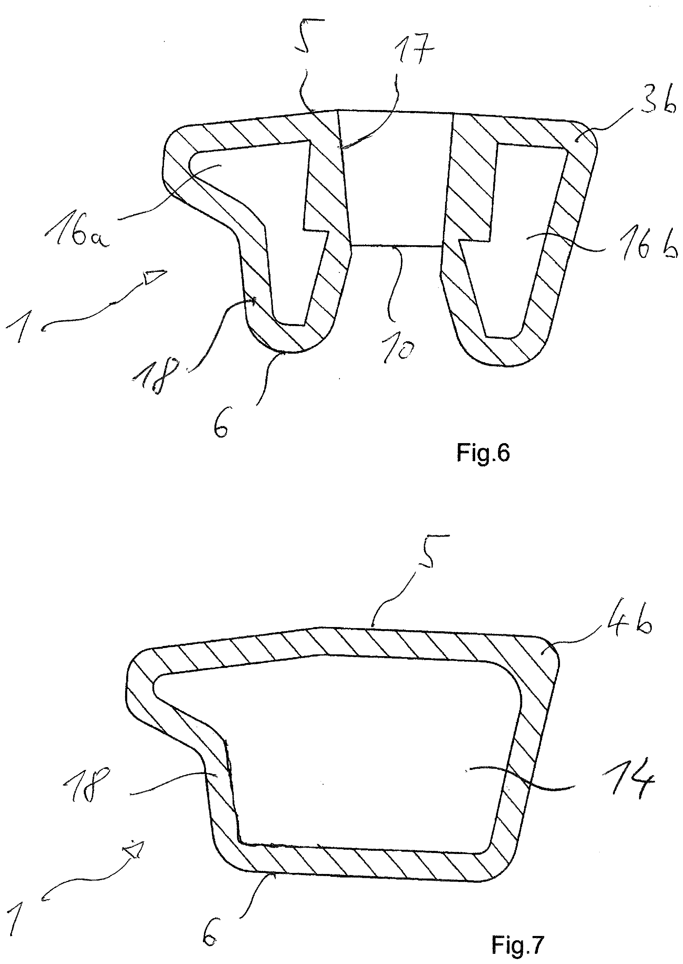

Fig. 5 depicts a cross section view along line B-B of Fig. 2 showing an exemplary cross section of the middle section 3b, being preferably identical to the cross section of the middle section 3a. As is further depicted in Fig. 5, the middle section 3b comprises preferably a one-chamber structure comprising one hollow chamber 14 in order to reduce the weight. The middle sections 3a and 3b are preferably formed in the area comprising the nail holes 10 such that nail hole grooves 7a and 7b are formed on the bottom surface 6 of the middle sections 3a, 3b. The nail hole grooves 7a, 7b are preferably formed along the whole line of nail holes 10. As can further be seen in Figs. 5 and 6, the structures at the middle sections 3a and 3b comprise a thinner wall structure and a thinned portion 18 compared to the front section 2 since the middle sections 3a and 3b form sections with a lower wear.

Alternatively to one-chamber structure as depicted in Fig. 5, a two-chamber structure as depicted in Fig. 6 illustrating a cross section view along the line C-C of Fig. 2 comprising two hollow chambers 16a and 16b might also be possible. The two hollow chambers 16a and 16b might comprise a web in between, for example above the nail hole grooves 7a, 7b, to separate the one chamber 14 into two chambers 16a, 16b. A two-chamber structure enhances the stiffness of the structure if needed.

Fig. 7 depicts a cross section view along the line D-D in Fig. 2. Fig. 7 illustrates a cross section of the right rear section 4b which can be applied in an analogous manner to left the rear section 4a. The rear sections 4a and 4b are preferably formed adjacent to the middle sections 3a, 3b, wherein the single sections 3a, 3b and 4a, 4b preferably comprising differing cross sections flowing over into each other for example in a smooth transition. Since the rear sections 4a and 4b form low wear and load sections, this structure might preferably be formed as a one chamber and thin-walled structure in order to minimize the weight of the horseshoe 1, without any thickened portions or webs.

It is obvious to a person skilled in the art that the design and cross section of the single sections 2, 3a, 3b, 4a, 4b might vary depending on the actual needs of the required horseshoe 1. The cross sections might vary in different ways in order to optimize the geometry, stiffness and durability of the horseshoe 1 in an optimized manner. Further, even the sections 3a and 3b or 4a and 4b might comprise distinguishing cross sections, for example in case of applying medicinal features or the like.

As can be seen in Fig. 6, nail holes 10 are preferably provided above the nail hole groove 7b for introducing horseshoe nails into the hoof for a firm attachment of the horseshoe 1 to the hoof. Common horseshoes allow only nail holes that are going straight through the horseshoe due to the way they are manufactured, mainly by a forging process or the like. This makes it difficult or sometimes impossible to attach a horseshoe depending on the condition of the horse's hoof. By using an additive manufacturing method, the angle for the nails can be adjusted as needed. The nail holes 10, i.e. the interior walls 17 of the nail holes 10, might be individually inclined with a predetermined angle in respect to a straight through direction, for example with an angle from 0 degree to 60 degrees. Alternatively, the interior wall 17 of a customized nail hole 10 is formed with a predetermined nail gap or tolerance gap such that the allocated nail can be inserted with different inclination angles for encompassing a nail in a predetermined inclined orientation. This makes it advantageously possible to create nail hole angles and as such nail angles that fit any hoof shape of the horse, ensuring that the horseshoe 1 can always be applied. Each nail hole 10 can comprise an individual adapted inclination angle having a steeper or less steep inclination or having a predetermined tolerance gap in a predetermined direction. Hence, the farrier advantageously has more options how to put the nail in the horseshoe or the hoof and can adjust the horseshoe 1 as required. Thus, the horseshoe 1 can always be attached to the hoof of the horse.

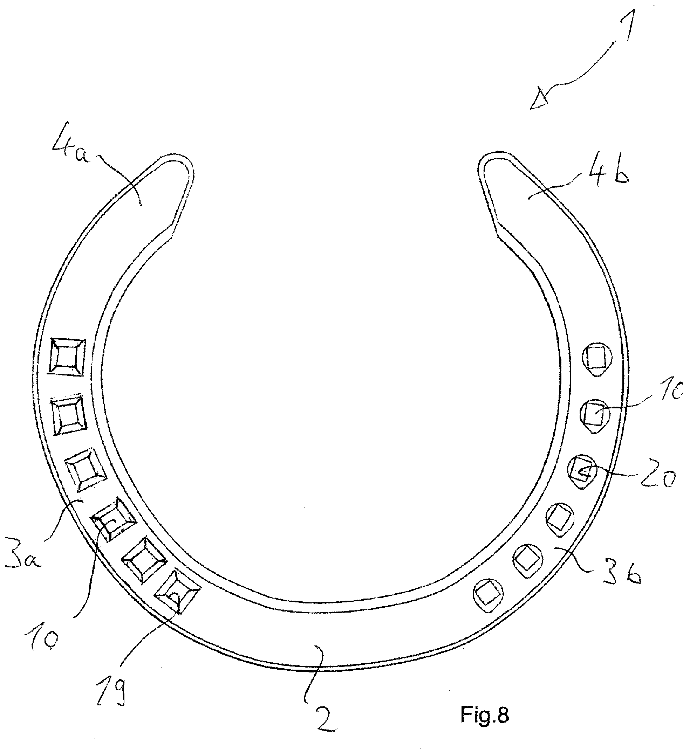

The nail holes 10, according to a preferred embodiment of the present invention, comprise a trapezoidal geometry or pyramid-like structure 19, or a teardrop-like structure 20 of the interior wall 17 of the nail holes 10 in particular as a manufacturing support. These embodiments are described in respect to Fig. 8. Fig. 8 depicts a cross section view along the sheet level of the horseshoe 1 of Fig. 3 from the bottom view of the horseshoe 1, wherein Fig. 8 illustrates trapezoidal geometry or pyramid-like nail holes 10 according to a first embodiment on the left-hand side and teardrop-like nail holes 10 according to a second embodiment on the righthand side.
The horseshoe 1 is preferably made of the material Scalmalloy as already described above. Also, titanium, aluminium, steel or a combination thereof or any other material suitable for lightweight structure and in particular suitable for an additive manufacturing process are also possible.

By means of the present invention, simply by recording at least one set of 2D input data in a time- and cost-efficient manner, the required information to design a custom-fit horseshoe 1 are gained by extracting the necessary data from the at least one set of 2D input data. Hence, the recorded at least one set of 2D input data are converted into a customized 3D horseshoe model, wherein the use of a reference object like a coin in the creation of the at least one set of 2D input data makes it possible to determine the exact size of the hoof or the required horseshoe and to generate a horseshoe that fits perfectly to the dedicated horse.

Through the automated generation of the 3D model from the at least one set of 2D input data, each horseshoe 1 can be individually adapted to the hoof of the horse. The present method advantageously allows the use of materials, such as a CFRP material or the like, which cannot be plastically deformed sufficiently to be formed such that the horseshoe fits the hoof during fitting. Further, this method advantageously eliminates the manual effort to create the design of each shoe and also the fitting of the horseshoe before attaching it to the hoof of the horse. This results in a significant cost saving in the creation of custom horseshoes as well as in the application to the horse by the farrier. In addition, the use of such a manufacturing process allows a lightweight construction of the horseshoe 1 which results in a significant weight reduction allowing the horses to run faster and healthier. It has been shown that the use of customized horseshoes, in particular such as those according to the invention, is very advantageous for racing applications. Due to the optimized lightweight structure, the horseshoe according to the invention is light and shock-absorbing, and it can also be designed as an orthopedic horseshoe. In this way, a malposition of the hoof, but also of the leg, can be treated or prevented.

Further, since the metal material to be processed in an additive manufacturing process is applied in powder form layer by layer to the base plate of the additive production device and sintered or melted locally, virtually point by point, by means of laser radiation in order to form a solid, homogeneous metal structure after solidification, a horseshoe with almost any geometry can be produced layer by layer.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents. Many other examples will be apparent to one skilled in the art upon reviewing the above specification. The embodiments were chosen and described in order to best explain the principles of the invention and its practical applications, to thereby enable others skilled in the art to best utilize the invention and various embodiments with various modifications as are suited to the particular use contemplated.

### List of reference signs

- 1: horseshoe
- 2: front section
- 3a, 3b: middle section
- 4a, 4b: rear section
- 5: top surface
- 6: bottom surface
- 7a, 7b: nail hole groove
- 8: exterior contour
- 9: interior contour
- 10: nail hole
- 11: clip
- 12: first thickened portion
- 13: second thickened portion
- 14: hollow chamber
- 16a, 16b: hollow chambers
- 17: interior wall of nail hole
- 18: thinned portion
- 19: trapezoidal structured wall
- 20: teardrop structured wall
- S1: step S1
- S2: step S2
- S3: step S3
- S3a: step S3a
- S3b: step S3b
- S4: step S4
- S5: step S5
- S6: step S6

## Claims

1. A manufacturing method, in particular an additive manufacturing method, for producing a customized lightweight horseshoe (1) comprising the steps of:
recording at least one set of 2D input data (S1) comprising data relating to the exterior and/or interior contour (8; 9) of the horseshoe (1) and to at least one reference feature;
determining 2D structure data (S2) describing a required topology of the horseshoe (1) by analyzing the recorded at least one set of 2D input data;
determining 3D structure data (S3) of the horseshoe (1) by analyzing the determined 2D structure data and additional supplementary structure data (S3b);
generating manufacturing toolpath data (S4) of the horseshoe (1) from the determined 3D structure data;
supplying the generated manufacturing toolpath data (S5) to a respective production device; and
producing the customized horseshoe (S6) by means of the respective production device.

2. Method according to claim 1, wherein the recorded at least one set of 2D input data relating to the top or bottom surface (5; 6) of the horseshoe (1) are gained from an existing horseshoe, a template of the horseshoe, a template of the hoof or the like.

3. Method according to claim 1 or 2, wherein the at least one reference feature is formed as a physical reference feature such as a grid, a dot-pattern, shapes or the like being printed on a card, a paper, a plastic sheet or the like, a ruler, callipers, a coin or any other object of a well-known size.

4. Method according to at least one of the preceding claims, wherein the at least one set of 2D input data are recorded by a photographing process, a scanning process, a video process or any other optical process, for example a laser process or the like.

5. Method according to at least one of the preceding claims, wherein the 2D structure data are extracted from the at least one set of 2D input data by using an image recognition process.

6. Method according to at least one of the preceding claims, wherein the 2D structure data are determined from the at least one set of 2D input data by taking into consideration the outer outline of the horseshoe (1), the shape of the horseshoe (1), the size of the horseshoe (1), the position of at least one clip (11), the position, orientation and/or inclination of at least one nail hole (10), the configuration of a nail hole groove (7a; 7b), the presence of a medicinal feature and/or the detection of the hoof position or the like.

7. Method according to at least one of the preceding claims, wherein the supplementary structure data, in particular being stored in a storage device, comprise data regarding the structure for reducing weight, for improving durability, for increasing stiffness, for improving manufacturability, for adding customized text or logos on the horseshoe (1), for adding customized structural features to the horseshoe (1) or the like.

8. Method according to at least one of the preceding claims, wherein the 3D structure data are determined by using a 3D geometry creation program.

9. Method according to at least one of the preceding claims, wherein the determined data are stored in a storage device (S2a; S3a) such as an archive or the like for re-training and improving the additive manufacturing method.

10. Method according to at least one of the preceding claims, wherein the material Scalmalloy, titanium, aluminium, steel, a combination thereof or any other material being suitable for a lightweight structure is used.

11. A customized lightweight horseshoe (1) being manufactured by a manufacturing method, in particular an additive manufacturing method, according to at least one of claims 1 to 10.

12. Horseshoe (1) according to claim 11 comprising predetermined sections (2; 3a, 3b; 4a, 4b) having cross sections differing from each other for providing a nail hole groovegroove (7a; 7b) for receiving at least one nail, for providing a thickened portion (12) for enhancing durability, in particular in a high wear section, for providing a thickened portion (13) for enhancing manufacturability, for providing a thinned portion (18) for reducing weight, in particular in a low wear section, for providing a one-chamber structure (14) or a two-chamber structure (16a, 16b) or a honeycomb structure or the like.

13. Horseshoe (1) according to claim 11 or 12 comprising customized features like a customized text or logo on its surface, at least one customized positioned clip (11), at least one customized formed nail hole (10), at least one nail hole groove (7a; 7b), at least one customized medicinal feature or the like.

14. Horseshoe (1) according to claim 13, wherein the interior wall (17) of said at least one customized nail hole (10) is inclined with a predetermined angle in respect to a straight through direction, in particular with an angle up to 60 degrees, and/or wherein the interior wall (17) of said at least one customized nail hole (10) is formed with a predetermined nail gap such that the allocated nail can be inserted with different inclination angles for encompassing a nail in a predetermined inclined orientation.

15. Horseshoe (1) according to at least one of claims 11 to 14, wherein the horseshoe (1) is made of Scalmalloy, titanium, aluminium, steel, a combination thereof, or the like.
